# EUROPÄISCHE PATENTSCHRIFT

(11) **EP 2 839 173 B1**
(45) Veröffentlichungstag und Bekanntmachung des Hinweises auf die Patenterteilung: **25.05.2016**
(21) Anmeldenummer: 13711621.6
(22) Anmeldetag: 19.03.2013
(51) Int. Cl.: F16C 11/06, B60G 7/00, F16C 11/10, G01L 5/00, G01L 1/04

(54) **KUGELGELENK FÜR EIN FAHRZEUG**
BALL JOINT FOR A VEHICLE
ARTICULATION A ROTULE POUR UN VÉHICULE

(30) Priorität: 20.04.2012 DE 102012206537
(43) Veröffentlichungstag der Anmeldung: 25.02.2015
(73) Patentinhaber: ZF Friedrichshafen AG, 80846 Friedrichshafen (DE)
(72) Erfinder: GRANNEMANN, Bernd, 32339 Espelkamp-Frotheim (DE); RECHTIEN, Martin, 49434 Neuenkirchen (DE)
(86) Internationale Anmeldenummer: PCT/EP2013/055594
(87) Internationale Veröffentlichungsnummer: WO 2013/156235

(56) Entgegenhaltungen:
- DE-A1- 19 521 060
- DE-A1- 19 712 947
- US-A- 5 020 933
- US-A1- 2007 003 360
- US-A1- 2009 232 590

## Beschreibung

Die Erfindung betrifft ein Kugelgelenk für ein Fahrzeug, mit einem eine Gelenkkugel umfassenden Kugelzapfen, einem die Gelenkkugel umschließenden und mit einer Zapfenöffnung versehenem Gelenkgehäuse, in dem die Gelenkkugel des Kugelzapfens bewegbar gelagert ist, wobei sich der Kugelzapfen durch die Zapfenöffnung hindurch aus dem Gelenkgehäuse heraus erstreckt, und einem Aktor, mittels welchem ein Druckstück in einer axialen Richtung auf das Gelenkgehäuse zu drückbar ist, sodass von Gelenkgehäuse und Druckstück ein Druck auf die Gelenkkugel ausübbar ist.

Ein derartiges Kugelgelenk ist aus der DE 197 12 947 A1 bekannt.

Aus der DE 102 45 983 A1 ist ein Kugelgelenk mit einem Gehäuse, zwei in dem Gehäuse angeordneten Lagerschalenelementen, einem einen Zapfen und eine Gelenkkugel aufweisenden Gelenkkörper, der mit seiner Gelenkkugel zwischen den beiden Lagerschalen-Elementen sitzt, und einem Gehäuseboden bekannt, der auf der dem Zapfen abgewandten Seite des Gehäuses angeordnet ist. Zwischen einem ersten der beiden Lagerschalenelemente und dem Gehäuseboden ist eine verstellbare Spanneinrichtung angeordnet, mittels der die Vorspannung, mit welcher der Gelenkkörper zwischen den Lagerschalenelementen eingespannt ist, veränderbar ist. Zum Verändern der mechanischen Vorspannung kann die Spanneinrichtung piezoelektrische oder hydraulische Elemente, wie zum Beispiel einen Hydraulikkolben aufweisen.

Es ist bekannt, das Reibmoment eines Kugelgelenkes einstellen zu können. Einige Lösungen bedienen sich dazu eines Stellantriebs, der zum Beeinflussen des Reibmoments eine Axialkraft auf die Kugel und ihre Lagerung ausübt. Zur Ermittlung des Reibmoments ist eine Sensorik mit einer Auswerteeinheit erforderlich, die aus verschiedenen Messgrößen auf das Reibmoment schließt.

Das Reibmoment lässt sich als Messgröße aber nicht in jeder Situation ermitteln. Da es nur bei Relativbewegung der Reibpartner auftritt, müssen andere Größen zum Ermitteln oder Einstellen des Reibmoments gefunden werden. Diese Größen können z.B. der zurückzulegende Weg eines Druckelementes, das Zählen von Umdrehungen eines antreibenden Elektromotors oder das Messen eines Motorstroms umfassen, der mittels einer Auswerteeinheit und einer Berechnung mit dem entstehenden Reibmoment in Zusammenhang gebracht wird. Primäres Ziel all dieser Möglichkeiten ist es, die auf das Kugelgelenk wirkende Axialkraft zu bestimmen, um das gewünschte Reibmoment einstellen zu können. Diese abgeleiteten Größen unterliegen aber großen Störeinflüssen durch Störkräfte von außen, Verschleiß im Kugelgelenk, Elastizitäten und Reibung im System, Temperaturabhängigkeiten und anderen nur schwer zu berücksichtigenden Einflüssen. Eine direkte Messung der Kraft bedingt Sensoren, die zwar aus der Messtechnik bekannt sind, aus Kostengründen aber nicht in großen Stückzahlen (Beispiel Automobilindustrie) zugänglich sind.

Ausgehend hiervon liegt der Erfindung die Aufgabe zugrunde, eine kostengünstige Möglichkeit zur Erfassung der Axialkraft zu schaffen.

Diese Aufgabe wird mit einem Kugelgelenk nach Anspruch 1 gelöst. Bevorzugte Weiterbildungen des Kugelgelenks sind in den Unteransprüchen und in der nachfolgenden Beschreibung gegeben.

Das Kugelgelenk, für ein Fahrzeug, insbesondere Kraftwagen, weist einen eine Gelenkkugel umfassenden Kugelzapfen, ein die Gelenkkugel umschließendes und mit einer Zapfenöffnung versehenes Gelenkgehäuse, in dem die Gelenkkugel des Kugelzapfens bewegbar, insbesondere drehbar und/oder schwenkbar, gelagert ist, wobei sich der Kugelzapfen durch die Zapfenöffnung hindurch aus dem Gelenkgehäuse heraus erstreckt, einen Aktor, mittels welchem ein Druckstück in einer axialen Richtung auf das Gelenkgehäuse zu drückbar, insbesondere bewegbar, ist, sodass von Gelenkgehäuse und Druckstück ein Druck auf die Gelenkkugel ausübbar ist, eine Feder, mittels welcher der Aktor an dem Druckstück angreift, und einen Wegsensor auf, mittels welchem die Länge der Feder messbar ist.

Aus der Länge der Feder ist nach dem hookeschen Gesetz die Federkraft berechenbar, sofern die zugehörige Federrate der Feder bekannt ist. Diese Federkraft entspricht insbesondere der gesuchten Axialkraft. Da geeignete Federn und Wegsensoren als kostengünstige Massenware auf dem Markt verfügbar sind, bildet die Kombination von Feder und Wegsensor einen kostengünstigen Kraftsensor.

Bevorzugt ist die Feder im Kraftfluss zwischen Aktor und Gelenkkugel und/oder Druckstück angeordnet. Somit entspricht die Federkraft insbesondere der Axialkraft, die von dem Druckstück auf die Gelenkkugel ausgeübt wird. Mittels der Feder greift der Aktor vorzugsweise axial an dem Druckstück und/oder an der Gelenkkugel an. Insbesondere erstreckt sich der Kugelzapfen in axialer Richtung durch die Zapfenöffnung hindurch aus dem Gelenkgehäuse heraus.

Bevorzugt ist die Federrate der Feder bekannt. Vorzugsweise sind ferner eine Referenzlänge der Feder und eine bei der Referenzlänge wirkende Referenzkraft bekannt. Beispielsweise ist als Referenzlänge die Länge der unbelasteten Feder bekannt. Insbesondere ist mittels des Wegsensors die absolute Länge der Feder messbar.

Bei der Länge der Feder handelt es sich insbesondere um die Länge der Feder in Federrichtung der Feder. Vorteilhaft wird die Länge der Feder mit zunehmender Federkraft und/oder Axialkraft kleiner. Insbesondere bildet die Feder eine Druckfeder. Bevorzugt fällt die Federrichtung mit der axialen Richtung zusammen.

Gemäß einer Weiterbildung ist eine mit dem Wegsensor gekoppelte Auswerteeinrichtung vorgesehen, mittels welcher insbesondere die von dem Druckstück auf die Gelenkkugel ausgeübte und/oder die auf die Gelenkkugel wirkende Kraft, vorzugsweise Axialkraft, ermittelbar ist. Die Auswerteeinrichtung kann in oder an dem Gelenkgehäuse oder im Abstand zu diesem vorgesehen sein. Insbesondere ist die Auswerteeinrichtung mittels elektrischer Leitungen mit dem Wegsensor verbunden. Beispielsweise umfasst die Auswerteeinrichtung einen Digitalrechner, insbesondere einen Mikrocontroller. Ergänzend oder alternativ kann die Auswerteeinrichtung aber auch einen Analogrechner umfassen.

Gemäß einer Ausgestaltung umfasst der Wegsensor ein Geberelement und ein Sensorelement, mittels welchem wenigstens ein von dem Geberelement abgegebenes oder abgebbares Signal erfassbar ist, welches insbesondere Informationen über die Länge der Feder liefert. Vorteilhaft ist die Signalstärke und/oder eine andere Eigenschaft des Signals am Ort des Sensorelements abhängig vom Abstand zwischen dem Geberelement und dem Sensorelement. Beispielsweise sind das Geberelement und das Sensorelement an der Feder befestigt und weisen in Federrichtung einen Abstand zueinander auf. Bevorzugt ist eines der Elemente mit einem mit dem Druckstück gekoppelten Ende oder Anschlusspunkt der Feder verbunden. Ferner ist ein anderes der Elemente bevorzugt mit einem mit dem Aktor gekoppelten Ende oder Anschlusspunkt der Feder verbunden. Somit ist der Abstand zwischen dem Geberelement und dem Sensorelement abhängig von der Länge der Feder. Die Auswerteeinrichtung ist bevorzugt mit dem Sensorelement verbunden, vorzugsweise mittels der elektrischen Leitungen.

Gemäß einer Weiterbildung umfasst das Geberelement einen Magneten, vorzugsweise einen Permanentmagneten, wobei das Sensorelement einen magnetfeldempfindlichen Sensor umfasst, der insbesondere von dem Magnetfeld des Magneten durchflutet wird. Das Signal ist bevorzugt durch das Magnetfeld und/oder durch eine das Magnetfeld charakterisierende Größe, wie z.B. durch die Flussdichte und/oder die Feldstärke des Magnetfelds, gegeben. Insbesondere ist das Magnetfeld am Ort des Sensorelements abhängig vom Abstand zwischen dem Magneten und dem Sensor. Beispielsweise ist die Flussdichte und/oder die Feldstärke des Magnetfelds am Ort des Sensorelements abhängig vom Abstand zwischen dem Magneten und dem Sensor. Somit ist durch eine Magnetfeldmessung die Länge der Feder ermittelbar.

Der Aktor ist bevorzugt unter Zwischenschaltung der Feder mit dem Druckstück gekoppelt. Vorteilhaft handelt es sich bei der Feder um eine Feder geringer Hysterese und geringer Temperaturabhängigkeit der Federeigenschaften. Die Feder umfasst z.B. eine Schraubenfeder, eine Tellerfeder, eine Blattfeder, eine Membranfeder oder eine andere Feder bekannter Art. Bevorzugt besteht die Feder aus Metall.

Die Feder ist vorzugsweise axial ausgerichtet und/oder erstreckt sich vorzugsweise in axialer Richtung. Bevorzugt verläuft der Kraftfluss durch die Feder in axialer Richtung. Somit beschreibt die Länge der Feder insbesondere die axiale Erstreckung der Feder. Bevorzugt handelt es sich bei der Länge der Feder um die axiale Länge der Feder.

Gemäß einer Weiterbildung ist in dem Gelenkgehäuse eine die Gelenkkugel umschließende Kugelschale angeordnet, in welcher die Gelenkkugel bewegbar, insbesondere drehbar und/oder schwenkbar, gelagert ist. Bevorzugt ist die Kugelschale in axialer Richtung zwischen dem Druckstück und einem Gehäuseanschlag angeordnet.

Die Kugelschale kann eine mehrteilige, vorzugsweise zweiteilige Kugelschale bilden. Gemäß einer Ausgestaltung umfasst die Kugelschale zwei Kugelschalenteile, wobei ein erster der Kugelschalenteile axial an dem Druckstück abgestützt oder durch dieses gebildet ist. Insbesondere ist der erste Kugelschalenteil mittels des Aktors gegen die Gelenkkugel drückbar und/oder relativ zu und/oder in dem Gelenkgehäuse verschiebbar, insbesondere in axialer Richtung. Ein zweiter der Kugelschalenteile ist bevorzugt axial an dem Gelenkgehäuse abgestützt und/oder starr mit diesem verbunden und/oder durch dieses gebildet. Insbesondere ist der zweite Kugelschalenteil axial an einem oder dem Gehäuseanschlag abgestützt. Bei den Kugelschalenteilen handelt es sich insbesondere um separate Teile.

Gemäß einer Ausgestaltung sind die Kugelschalenteile in axialer Richtung einander gegenüberliegend angeordnet. Insbesondere ist die Gelenkkugel in axialer Richtung zwischen den Kugelschalenteilen angeordnet und/oder eingeschlossen.

Gemäß einer bevorzugten Alternative bildet die Kugelschale eine einteilige Kugelschale. Vorteilhaft ist die einteilige Kugelschale mit wenigstens einem Schlitz versehen, beispielsweise im Bereich ihrer Zapfenöffnung. Insbesondere verläuft der Schlitz in axialer Richtung und ist vorteilhaft zur Zapfenöffnung hin offen. Durch den Schlitz kann das Einsetzen der Gelenkkugel in die einteilige Kugelschale durch die Zapfenöffnung hindurch erleichtert werden. Wird, wie oben beschrieben, ein Druck auf die Kugelschale zur Erhöhung des Reibmomentes ausgeübt, so bewirken die Schlitze in axialer Richtung den Vorteil, dass Raum für die elastische Verformung der Kugelschale vorhanden ist.

Die Kugelschale und/oder die Kugelschalenteile sind bezüglich der axialen Richtung vorzugsweise drehstarr mit dem Gelenkgehäuse verbunden. Die Kugelschale umfasst bevorzugt eine zusätzliche Zapfenöffnung, durch welche hindurch sich der Kugelzapfen aus der Kugelschale heraus erstreckt, insbesondere in axialer Richtung. Bevorzugt besteht das Gelenkgehäuse aus Metall, insbesondere aus Stahl.

Die Kugelschale ist bevorzugt mit einer hohlkugelförmigen Lagerfläche versehen. Insbesondere liegt die Kugeloberfläche der Gelenkkugel gleitfähig an der hohlkugelförmigen Lagerfläche an. Bevorzugt fällt der Mittelpunkt der hohlkugelförmigen Lagerfläche mit dem Mittelpunkt der Gelenkkugel zusammen. Die Kugelschale besteht vorzugsweise aus Kunststoff, insbesondere aus Polyacetal (POM). Im Falle der mehrteiligen oder zweiteiligen Kugelschale umfasst jeder der Kugelschalenteile bevorzugt einen Teil der hohlkugelförmigen Lagerfläche. Insbesondere besteht zumindest der erste Kugelschalenteil aus Kunststoff. Vorteilhaft bestehen beide Kugelschalenteile aus Kunststoff. Insbesondere kann der Kunststoff durch Filamente oder Fasern aus Metall oder Kunststoff armiert sein.

Vorzugsweise ist die Kugelschale mittels des Aktors, insbesondere unter Zwischenschaltung des Druckstücks, in axialer Richtung zusammendrückbar. Wird das Druckstück mittels des Aktors in axialer Richtung auf die Kugelschale und/oder auf den ersten Kugelschalenteil zu gedrückt und/oder bewegt, so wird die Kugelschale insbesondere in axialer Richtung zusammengedrückt. Bei einer mehr- oder zweiteiligen Kugelschale bewegen sich dabei insbesondere die Kugelschalenteile aufeinander zu. Bei einer einteiligen Kugelschale verformt sich dabei insbesondere die Kugelschale, vorzugsweise elastisch. Bevorzugt ist die Kugelschale mittels des Aktors unter Verformung der Kugelschale in axialer Richtung zusammendrückbar.

Vorzugsweise liegt das Druckstück an der Kugelschale und/oder an dem ersten Kugelschalenteil an. Das Druckstück dient vorzugsweise dazu, die Federkraft gleichmäßig in die Kugelschale und/oder in den ersten Kugelschalenteil einzuleiten und/oder die Feder an der Kugelschale und/oder an dem ersten Kugelschalenteil zu lagern. Insbesondere liegt das mit dem Druckstück gekoppelte Ende der Feder an dem Druckstück an. Vorzugsweise ist das Geberelement des Wegsensors an dem Druckstück befestigt.

Gemäß einer Ausgestaltung ist die Kugelschale an ihrem dem Druckstück zugewandten Außenbereich konisch ausgebildet. Bevorzugt weist das Druckstück eine konische Ausnehmung auf, in welche der dem Druckstück zugewandte konische Außenbereich der Kugelschale eingreift. Gemäß einer Weiterbildung ist die Kugelschale an ihrem dem Gehäuseanschlag zugewandten Außenbereich konisch ausgebildet. Bevorzugt weist der Gehäuseanschlag eine konische Ausnehmung auf, in welche der dem Gehäuseanschlag zugewandte konische Außenbereich der Kugelschale eingreift. Durch die konische Ausgestaltung ergibt sich besonders gute Krafteinleitung in die Kugelschale.

Der Kugelzapfen umfasst bevorzugt einen Zapfenbereich, der fest, insbesondere starr, mit der Gelenkkugel verbunden ist. Beispielsweise ist der Zapfenbereich einstückig und/oder materialhomogen mit der Gelenkkugel ausgebildet. Alternativ sind die Gelenkkugel und der Zapfenbereich als separate Bauteile hergestellt, die nach ihrer Herstellung miteinander gefügt sind. Der Kugelzapfen besteht bevorzugt aus Metall, insbesondere aus Stahl. Vorteilhaft ist der Kugelzapfen mit seiner Gelenkkugel gleitfähig in einer Kugelschale gelagert. Insbesondere erstreckt sich der Kugelzapfen mit seinem Zapfenbereich aus der Kugelschale und/oder aus dem Gelenkgehäuse heraus.

Die Feder ist insbesondere im Kraftfluss zwischen Aktor und Druckstück eingebracht, wobei die Federsteifigkeit (Federrate) der Feder bekannt ist. Obwohl die Feder sich in einem geschlossenen Kraftfluss mit anderen, zumeist unbekannten Elastizitäten (z.B. Gelenkgehäuse, Kugelschale, Aktor) befindet, kann dennoch davon ausgegangen werden, dass die Federkraft gleich der gesuchten Axialkraft ist, die auf die aus Kugelschale und Gelenkkugel bestehende Anordnung wirkt, da es sich um eine Reihenschaltung von Elastizitäten handelt. Somit ermöglicht die Messung der absoluten Länge der Feder zusammen mit der bekannten Federrate die Berechnung der wirkenden Kraft mittels der Auswerteeinheit. Da das Sensorelement und das Geberelement des Wegsensors bevorzugt an die beiden Anschlusspunkte der Feder gekoppelt sind, ist die Kraftbestimmung insbesondere auch unabhängig von einem Spiel, welches sich durch Verschleiß einstellen kann. Ein solches Spiel wird z.B. als Sinken der Federkraft erkannt und kann durch den Aktor nachgeführt werden.

Das Gelenkgehäuse weist vorzugsweise eine der Zapfenöffnung gegenüberliegende Öffnung auf. Durch diese Öffnung können sämtliche, o.g. Bauteile beginnend mit dem Kugelzapfen bzw. der Kugelschale in das Gehäuse eingebracht werden. Das Gehäuse wird anschließend mit einem geeigneten Verschluss geschlossen. Hierzu eignen sich Deckel oder Verschlussringe, die mit dem Gehäuseende verrollt werden. Alternativ kann die Gehäuseöffnung an ihrem Ende ein Gewinde aufweisen, so dass das Gehäuse mit einem Gehäusedeckel geschlossen wird, der ein entsprechendes Gegengewinde aufweist. Bei der Ausführung mit Gewinde ist somit auch ein zerstörungsfreies Öffnen des Gelenkgehäuses möglich, um das Kugelgelenk oder einzelne Bauteile zu warten oder zu tauschen.

Die Erfindung wird nachfolgend anhand bevorzugter Ausführungsformen unter Bezugnahme auf die Zeichnung beschrieben. In der Zeichnung zeigen:
Fig. 1 einen schematischen Längsschnitt durch ein Kugelgelenk gemäß einer ersten Ausführungsform und
Fig. 2 einen schematischen Längsschnitt durch ein Kugelgelenk gemäß einer zweiten Ausführungsform.

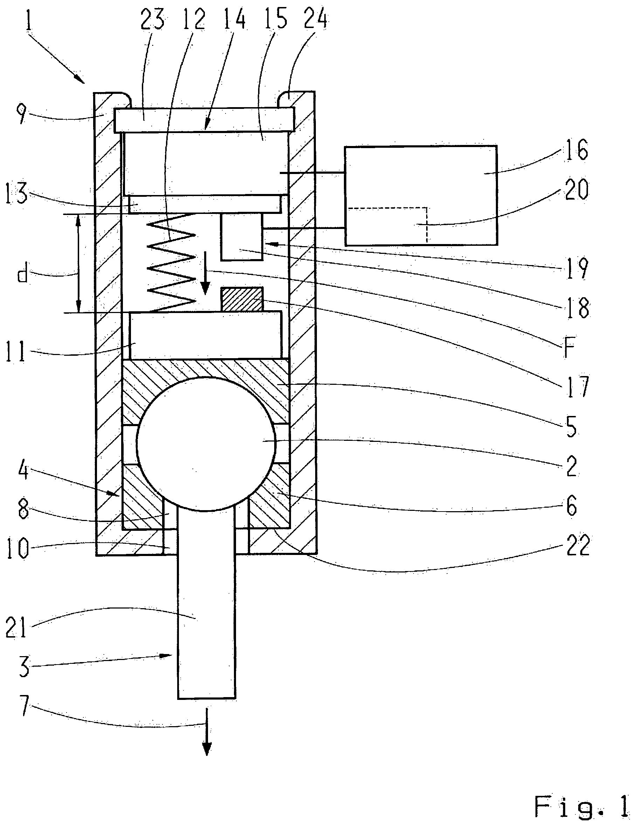

Aus Fig. 1 ist ein schematischer Längsschnitt durch ein Kugelgelenk 1 gemäß einer ersten Ausführungsform ersichtlich, wobei ein eine Gelenkkugel 2 umfassender Kugelzapfen 3 mit seiner Gelenkkugel 2 drehbar und/oder schwenkbar in einer Kugelschale 4 gelagert ist. Die Kugelschale 4 umfasst einen ersten Kugelschalenteil 5 sowie einen zweiten Kugelschalenteil 6, wobei die Kugelschalenteile 5 und 6 in einer axialen Richtung 7 auf unterschiedlichen Seiten an der Gelenkkugel 2 anliegen. Ferner umfasst der zweite Kugelschalenteil 6 eine Zapfenöffnung 8, durch welche sich der Kugelzapfen 3 axial aus der Kugelschale 4 heraus erstreckt. Gemäß der ersten Ausführungsform ist die Kugelschale 4 als zweiteilige Kugelschale ausgebildet, sodass es sich bei den Kugelschalenteilen 5 und 6 µm separate Bauteile handelt. Die Kugelschale 4 ist zusammen mit der Gelenkkugel 2 in einem Gelenkgehäuse 9 angeordnet, welches ebenfalls mit einer Zapfenöffnung 10 versehen ist, durch welche hindurch sich der Kugelzapfen 3 aus dem Gehäuse 9 heraus erstreckt. Der Kugelzapfen 3 weist einen Zapfenbereich 21 auf, der starr mit der Gelenkkugel 2 verbunden ist.

Der erste Kugelschalenteil 5 ist in axialer Richtung 7 verschiebbar in dem Gehäuse 9 geführt, wohingegen der zweite Kugelschalenteil 6 in axialer Richtung 7 an einem Anschlag 22 des Gehäuse 9 abgestützt ist. Auf einer der Gelenkkugel 2 abgewandten Seite des ersten Kugelschalenteils 5 ist ein Druckstück 11 befestigt, welches unter Zwischenschaltung einer Feder 12 mit einem beweglichen Teil 13 eines Aktors 14 gekoppelt ist. Ein stationärer Teil 15 des Aktors 14 ist an dem Gehäuse 9 befestigt. Der Aktor 14 ist mit einer Steuereinrichtung 16 verbunden und mittels dieser steuerbar. Insbesondere ist der bewegliche Teil 13 des Aktors 14 mittels der Steuereinrichtung 16 in axialer Richtung 7 relativ zu dem stationären Teil 15 verschiebbar, sodass der axiale Abstand d zwischen dem beweglichen Teil 13 und dem Druckstück 11 variierbar ist. Eine Veränderung des Abstands d hat aber auch eine Veränderung der von dem Aktor 14 unter Zwischenschaltung der Feder 12 auf das Druckstück 11 in axialer Richtung 7 ausgeübten Kraft F zur Folge. Das Druckstück 11 gibt die Kraft F an den ersten Kugelschalenteil 5 weiter, der somit die Gelenkkugel 2 in axialer Richtung 7 gegen den zweiten Kugelschalenteil 6 drückt. Da der aktuelle Abstand d der aktuellen Länge der Feder 12 entspricht und diese im Kraftfluss zwischen Aktor 14 und Kugelschalenteil 5 angeordnet ist, lässt sich aus der Länge d und der Federrate der Feder 12 die Kraft F nach dem hookeschen Gesetz berechnen. Die Federrate wird hierbei insbesondere als bekannt vorausgesetzt.

Auf einer dem beweglichen Teil 13 zugewandten Seite des Druckstücks 11 ist ein Geberelement 17 befestigt, welches einem Sensorelement 18 gegenüberliegt, welches auf einer dem Druckstück 11 zugewandten Seite des beweglichen Teils 13 befestigt ist und einen axialen Abstand zu dem Geberelement 17 aufweist. Beispielsweise ist das Geberelement 17 als Permanentmagnet und das Sensorelement 18 als magnetfeldempfindlicher Sensor ausgebildet, der von dem Magnetfeld des Permanentmagneten durchflutet wird. Eine Abstandsänderung zwischen dem Druckstück 11 und dem beweglichen Teil 13 führt somit zu einer Änderung des Magnetfelds am Ort des Sensors, die mittels des Sensors erfassbar ist. Das Geberelement 17 und das Sensorelement 18 bilden somit gemeinsam einen Wegsensor 19, mittels welchem der Abstand d bestimmbar ist.

Das Sensorelement 18 ist mit einer Auswerteeinrichtung 20 verbunden und stellt dieser Informationen über den Abstand d zur Verfügung, sodass mittels der Auswerteeinrichtung 20 die von der Feder 12 auf das Druckstück 11 ausgeübte Kraft F berechenbar ist. Die Federrate der Feder 12 ist dazu in der Auswerteeinrichtung 20 als Information hinterlegt. Ferner ist bevorzugt die Länge der unbelasteten Feder 12 als Information in der Auswerteeinrichtung 20 hinterlegt. Gemäß der Ausführungsform ist die Auswerteeinrichtung 20 von der Steuereinrichtung 16 gebildet.

Das Gehäuse 9 ist an seinem der Zapfenöffnung 10 abgewandten Ende mit einem Deckel 23 verschlossen, der durch einen umgeformten Gehäuserand 24 an dem Gehäuse 9 festgelegt ist.

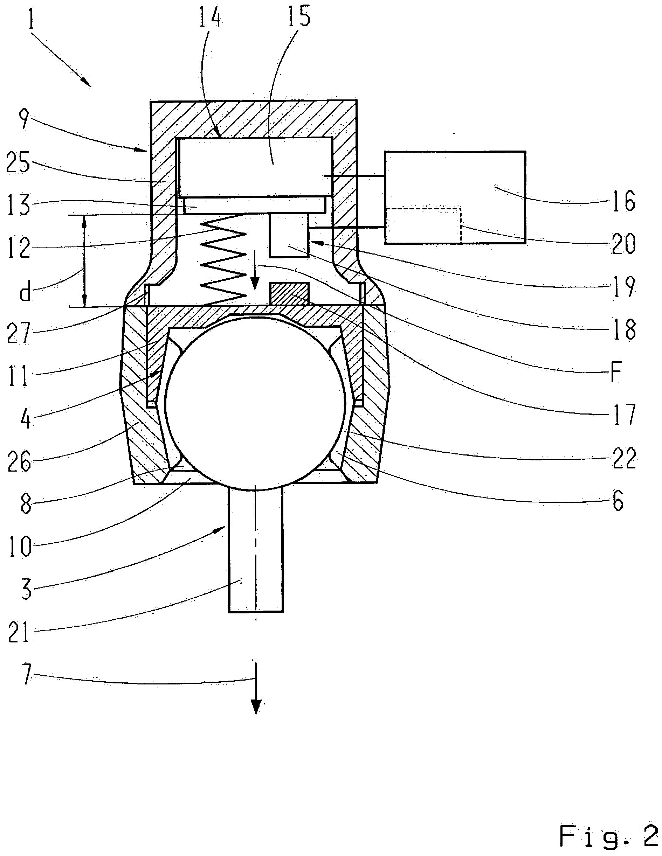

Aus Fig. 2 ist ein schematischer Längsschnitt durch ein Kugelgelenk 1 gemäß einer zweiten Ausführungsform ersichtlich, wobei zu der ersten Ausführungsform ähnliche oder identische Merkmale mit denselben Bezugszeichen wie bei der ersten Ausführungsform bezeichnet sind. Im Unterschied zur ersten Ausführungsform ist die Kugelschale 4 einstückig ausgebildet und in axialer Richtung 7 zwischen dem Druckstück 11 und dem Gehäuseanschlag 22 angeordnet. Die Kugelschale 4 ist dabei sowohl an dem Druckstück 11 als auch an dem Anschlag 22 abgestützt. Wird nun der bewegliche Teil 13 des Aktors 14 in axialer Richtung 7 relativ zu dem stationären Teil 15 verschoben, sodass sich der axiale Abstand d zwischen dem beweglichen Teil 13 und dem Druckstück 11 verändert, was eine Veränderung der von dem Aktor 14 unter Zwischenschaltung der Feder 12 auf das Druckstück 11 in axialer Richtung 7 ausgeübten Kraft F zur Folge hat, gibt das Druckstück 11 die Kraft F an die Kugelschale 4 weiter, die dabei axial zusammengedrückt wird und den auf die Gelenkkugel 2 ausgeübten Druck erhöht.

Das Druckstück 11 ist mit einer konischen Ausnehmung versehen, in welcher die Kugelschale 4 mit einer ersten konischen Außenfläche sitzt. Ferner ist der Anschlag 22 mit einer konischen Ausnehmung versehen, in welcher die Kugelschale 4 mit einer zweiten konischen Außenfläche sitzt, die der ersten konischen Außenfläche axial gegenüberliegt. Auch ist das Gehäuse 9 zweiteilig ausgebildet und weist einen ersten Gehäuseteil 25 und einen zweiten Gehäuseteil 26 auf, der mit dem ersten Gehäuseteil 25 über ein Gewinde 27 verschraubt ist.

Abgesehen von diesen Unterschieden stimmt die zweite Ausführungsform im Wesentlichen mit der ersten Ausführungsform überein, sodass zur weiteren Beschreibung der zweiten Ausführungsform auf die Beschreibung der ersten Ausführungsform verwiesen wird.

### Bezugszeichen

- 1: Kugelgelenk
- 2: Gelenkkugel
- 3: Kugelzapfen
- 4: Kugelschale
- 5: erster Kugelschalenteil
- 6: zweiter Kugelschalenteil
- 7: axiale Richtung
- 8: Zapfenöffnung der Kugelschale
- 9: Gelenkgehäuse
- 10: Zapfenöffnung des Gelenkgehäuses
- 11: Druckstück
- 12: Feder
- 13: beweglicher Teil des Aktors
- 14: Aktor
- 15: stationärer Teil des Aktors
- 16: Steuereinrichtung
- 17: Geberelement
- 18: Sensorelement
- 19: Wegsensor
- 20: Auswerteeinrichtung
- 21: Zapfenbereich des Kugelzapfens
- 22: axialer Gehäuseanschlag
- 23: Deckel
- 24: Gehäuserand
- 25: erste Gehäuseteil
- 26: zweiter Gehäuseteil
- 27: Gewinde
- d: Abstand / Federlänge
- F: Federkraft / Axialkraft

## Patentansprüche

1. Kugelgelenk für ein Fahrzeug, mit einem eine Gelenkkugel (2) umfassenden Kugelzapfen (3), einem die Gelenkkugel (2) umschließenden und mit einer Zapfenöffnung (10) versehenem Gelenkgehäuse (9), in dem die Gelenkkugel (2) des Kugelzapfens (3) bewegbar gelagert ist, wobei sich der Kugelzapfen (3) durch die Zapfenöffnung (10) hindurch aus dem Gelenkgehäuse (9) heraus erstreckt, und einem Aktor (14), mittels welchem ein Druckstück (11) in einer axialen Richtung (7) auf das Gelenkgehäuse (9) zu drückbar ist, sodass von Gelenkgehäuse (9) und Druckstück (11) ein Druck auf die Gelenkkugel (2) ausübbar ist, **gekennzeichnet durch** eine Feder (12), mittels welcher der Aktor (14) an dem Druckstück (11) angreift, und einen Wegsensor (19), mittels welchem die Länge (d) der Feder (12) messbar ist.

2. Kugelgelenk nach Anspruch 1, **gekennzeichnet durch** eine mit dem Wegsensor (19) verbundene Auswerteeinrichtung (20), mittels welcher die von dem Druckstück (11) auf die Gelenkkugel (2) ausgeübte Kraft (F) ermittelbar ist.

3. Kugelgelenk nach Anspruch 1 oder 2, **dadurch gekennzeichnet, dass** der Wegsensor (19) ein Geberelement (17) und ein Sensorelement (18) umfasst, mittels welchem wenigstens ein von dem Geberelement (17) abgegebenes Signal erfassbar ist, welches Informationen über die Länge (d) der Feder (12) liefert.

4. Kugelgelenk nach Anspruch 3, **dadurch gekennzeichnet, dass** eines der Elemente (17) mit einem mit dem Druckstück (11) gekoppelten Ende der Feder (12) und ein anderes der Elemente (18) mit einem mit dem Aktor (14) gekoppelten Ende der Feder (12) verbunden ist, sodass der Abstand zwischen den Elementen (17, 18) abhängig von der Länge (d) der Feder (12) ist.

5. Kugelgelenk nach Anspruch 3 oder 4, **dadurch gekennzeichnet, dass** das Geberelement (17) einen Permanentmagneten und das Sensorelement (18) einen magnetfeldempfindlichen Sensor umfasst, der von dem Magnetfeld des Magneten durchflutet wird.

6. Kugelgelenk nach einem der vorangehenden Ansprüche, **dadurch gekennzeichnet, dass** die Feder (12) eine Schraubenfeder, eine Tellerfeder, eine Blattfeder oder eine Membranfeder umfasst.

7. Kugelgelenk nach einem der vorangehenden Ansprüche, **dadurch gekennzeichnet, dass** der Aktor (14) unter Zwischenschaltung der Feder (12) mit dem Druckstück (11) gekoppelt ist.

8. Kugelgelenk nach einem der vorangehenden Ansprüche, **gekennzeichnet durch** eine in dem Gelenkgehäuse (9) angeordnete und die Gelenkkugel (2) umschließende Kugelschale (4), in welcher die Gelenkkugel (2) bewegbar gelagert ist, wobei die Kugelschale (4) in axialer Richtung (7) zwischen dem Druckstück (11) und einem Gehäuseanschlag (22) angeordnet ist.

9. Kugelgelenk nach den Anspruch 8, **dadurch gekennzeichnet, dass** die Kugelschale (4) zwei Kugelschalenteile (5, 6) umfasst, wobei ein erster der Kugelschalenteile (5) axial an dem Druckstück (11) abgestützt und ein zweiter der Kugelschalenteile (6) axial an dem Gehäuseanschlag (22) abgestützt ist und wobei die Gelenkkugel (2) in axialer Richtung (7) zwischen den Kugelschalenteilen (5, 6) angeordnet ist.

10. Kugelgelenk nach Anspruch 8, **dadurch gekennzeichnet, dass** die Kugelschale (4) einteilig ausgebildet ist und mittels des Aktors (14) in axialer Richtung (7) zusammendrückbar ist.

## Claims

1. Ball joint for a vehicle, having a ball pin (3) that comprises a joint ball (2), a joint housing (9) that encloses the joint ball (2) and is provided with a peg opening (10), in which housing the joint ball (2) of the ball pin (3) is mounted such that it can be moved, wherein the ball pin (3) protrudes from the joint housing (9) through the peg opening (10), and an actuator (14) by means of which it is possible to press a pressure piece (11) in an axial direction (7) towards the joint housing (9), such that the joint housing (9) and the pressure piece (11) can exert pressure on the joint ball (2), **characterized by** a spring (12) by means of which the actuator (14) acts on the pressure piece (11), and a travel sensor (19) by means of which it is possible to measure the length (d) of the spring (12).

2. Ball joint according to Claim 1, **characterized by** an evaluation device (20) which is connected to the travel sensor (19) and by means of which it is possible to determine the force (F) exerted by the pressure piece (11) on the joint ball (2).

3. Ball joint according to Claim 1 or 2, **characterized in that** the travel sensor (19) comprises an emitter element (17) and a sensor element (18) that can detect at least one signal which is emitted by the emitter element (17) and which provides information regarding the length (d) of the spring (12).

4. Ball joint according to Claim 3, **characterized in that** one of the elements (17) is connected to an end of the spring (12) coupled to the pressure piece (11), and another of the elements (18) is connected to an end of the spring (12) coupled to the actuator (14), such that the distance between the elements (17, 18) is dependent on the length (d) of the spring (12).

5. Ball joint according to Claim 3 or 4, **characterized in that** the emitter element (17) comprises a permanent magnet and the sensor element (18) comprises a sensor which is sensitive to magnetic fields and which is permeated by the magnetic field of the magnet.

6. Ball joint according to one of the preceding claims, **characterized in that** the spring (12) comprises a coil spring, a Belleville washer, a leaf spring or a diaphragm spring.

7. Ball joint according to one of the preceding claims, **characterized in that** the actuator (14) is coupled to the pressure piece (11) via the spring (12).

8. Ball joint according to one of the preceding claims, **characterized by** a ball shell (4) which is arranged in the joint housing (9), surrounds the joint ball (2) and in which the joint ball (2) is mounted such that it can be moved, wherein the ball shell (4) is arranged, in the axial direction (7), between the pressure piece (11) and a housing end stop (22).

9. Ball joint according to Claim 8, **characterized in that** the ball shell (4) comprises two ball shell parts (5, 6), wherein a first one of the ball shell parts (5) bears axially against the pressure piece (11) and a second of the ball shell parts (6) bears axially against the housing end stop (22), and wherein the joint ball (2) is arranged, in the axial direction (7), between the ball shell parts (5, 6).

10. Ball joint according to Claim 8, **characterized in that** the ball shell (4) is formed in one piece and can be pressed together, in the axial direction (7), by means of the actuator (14).

## Revendications

1. Articulation à rotule pour un véhicule, comprenant un tourillon à rotule (3) comprenant une rotule d'articulation (2), un boîtier d'articulation (9) entourant la rotule d'articulation (2) et pourvu d'une ouverture de tourillon (10), dans lequel est supportée de manière déplaçable la rotule d'articulation (2) du tourillon à rotule (3), le tourillon à rotule (3) s'étendant à travers l'ouverture de tourillon (10) hors du boîtier d'articulation (9), et un actionneur (14), au moyen duquel une pièce de pression (11) peut être pressée dans une direction axiale (7) sur le boîtier d'articulation (9), de telle sorte qu'une pression puisse être exercée sur la rotule d'articulation (2) par le boîtier d'articulation (9) et la pièce de pression (11), **caractérisée par** un ressort (12) au moyen duquel l'actionneur (14) vient en prise sur la pièce de pression (11), et un capteur de position (19) au moyen duquel la longueur (d) du ressort (12) peut être mesurée.

2. Articulation à rotule selon la revendication 1, **caractérisée par** un dispositif d'analyse (20) connecté au capteur de position (19), au moyen duquel la force (F) exercée sur la rotule d'articulation (2) par la pièce de pression (11) peut être déterminée.

3. Articulation à rotule selon la revendication 1 ou 2, **caractérisée en ce que** le capteur de position (19) comprend un élément transmetteur (17) et un élément de capteur (18), au moyen duquel au moins un signal fourni par l'élément transmetteur (17) peut être détecté, lequel fournit des informations concernant la longueur (d) du ressort (12).

4. Articulation à rotule selon la revendication 3, **caractérisée en ce que** l'un des éléments (17) est connecté à une extrémité du ressort (12) accouplée à la pièce de pression (11) et un autre des éléments (18) est connecté à une extrémité du ressort (12) accouplée à l'actionneur (14), de telle sorte que la distance entre les éléments (17, 18) dépende de la longueur (d) du ressort (12).

5. Articulation à rotule selon la revendication 3 ou 4, **caractérisée en ce que** l'élément transmetteur (17) comprend un aimant permanent et l'élément de capteur (18) comprend un capteur sensible aux champs magnétiques, qui est parcouru par le champ magnétique de l'aimant.

6. Articulation à rotule selon l'une quelconque des revendications précédentes, **caractérisée en ce que** le ressort (12) comprend un ressort à boudin, un ressort Belleville, un ressort à lame ou un ressort à membrane.

7. Articulation à rotule selon l'une quelconque des revendications précédentes, **caractérisée en ce que** l'actionneur (14) est accouplé à la pièce de pression (11) par interposition du ressort (12).

8. Articulation à rotule selon l'une quelconque des revendications précédentes, **caractérisée par** une coque sphérique (4) disposée dans le boîtier d'articulation (9) et entourant la rotule d'articulation (2), dans laquelle est montée de manière déplaçable la rotule d'articulation (2), la coque sphérique (4) étant disposée dans la direction axiale (7) entre la pièce de pression (11) et une butée de boîtier (22).

9. Articulation à rotule selon la revendication 8, **caractérisée en ce que** la coque sphérique (4) comprend deux parties de coque sphérique (5, 6), une première des parties de coque sphérique (5) étant supportée axialement sur la pièce de pression (11) et une deuxième des parties de coque sphérique (6) étant supportée axialement sur la butée de boîtier (22) et la rotule d'articulation (2) étant disposée dans la direction axiale (7) entre les parties de coque sphérique (5, 6).

10. Articulation à rotule selon la revendication 8, **caractérisée en ce que** la coque sphérique (4) est réalisée d'une seule pièce et peut être comprimée au moyen de l'actionneur (14) dans la direction axiale (7).
